# EUROPÄISCHE PATENTSCHRIFT

(11) **EP 2 731 773 B1**
(45) Veröffentlichungstag und Bekanntmachung des Hinweises auf die Patenterteilung: **19.04.2017**
(21) Anmeldenummer: 12725802.8
(22) Anmeldetag: 06.06.2012
(51) Int. Cl.: B29C 33/02

(54) **BAUFORM MIT KUPFERVLIES**
BUILDING MOLD CONTAINING COPPER NONWOVEN
CONSTRUCTION COMPORTANT UNE NAPPE DE CUIVRE

(30) Priorität: 12.07.2011 DE 102011079027
(43) Veröffentlichungstag der Anmeldung: 21.05.2014
(73) Patentinhaber: Carbon Rotec GmbH & Co. KG, 27809 Lemwerder (DE)
(72) Erfinder: SAEGER, Helge, 27809 Lemwerder (DE); DREWES, Marcus, 27809 Lemwerder (DE)
(74) Vertreter: Heiland, Karsten
(86) Internationale Anmeldenummer: PCT/EP2012/060687
(87) Internationale Veröffentlichungsnummer: WO 2013/007452

(56) Entgegenhaltungen:
- DE-A1- 2 731 535
- DE-A1- 3 808 363
- DE-A1-102004 042 422
- DE-A1-102008 029 058
- DE-C1- 3 103 890
- DK-A- 201 070 038
- GB-A- 2 346 107
- US-A- 5 358 211
- US-B1- 6 283 745

## Beschreibung

Die vorliegende Erfindung betrifft ein Verfahren zur Herstellung von geformten Verbundwerkstoffen und unter Verwendung einer Bauform, welche wenigstens einen zur Formung des Verbundwerkstoffs vorgesehenen ersten Flächenabschnitt und einen diesem im Wesentlichen gegenüber liegenden, und nicht zur Formung des Verbundwerkstoffs vorgesehenen zweiten Flächenabschnitt aufweist, sowie eine dazwischen angeordnete Heizvorrichtung.

Solche Verbundwerkstoffe sind insbesondere faserverstärkte Verbundwerkstoffe, vor allem carbon- und/oder glasfaserverstärkte Verbundwerkstoffe. Weiterhin bevorzugt betrifft die Erfindung ein Verfahren unter Verwendung einer Bauform für großflächige Verbundwerkstoffe bzw. Bauteile aus solchen Verbundwerkstoffen. Großflächig soll hier und im Folgenden als wenigstens eine Oberflächenausdehnung von 1 m² aufweisend verstanden werden. Darunter fallen vor allem die Verbundwerkstoffe und Bauteile daraus in dem Bereich des Baus von Komponenten von Windkraftanlagen.

Bauformen zur Herstellung von Verbundwerkstoffen stellen die Grundlage für die Formgebung im Bereich des Verbundwerkstoffbaus, insbesondere des Leichtbaus dar. Sie gewährleisten nicht nur eine gewünschte Geometrie sondern dienen auch gleichzeitig zur Verarbeitung der Verbundwerkstoffe, insbesondere zum Aushärten darin enthaltener Matrixbildner. So werden etwa im Bereich des Faserverbundwerkstoffbaus in die Bauform ein Fasermaterial gegeben, welches anschließend in beispielsweise einem Vakuuminfusionsprozess mit Harz imprägniert und durch Wärmeeinwirkung ausgehärtet wird. Der Herstellungsschritt der Imprägnierung kann auch durch die Verwendung von vorimprägniertem Material (Prepreg) erleichtert werden.

Um ausreichend Wärme auf den herzustellenden Verbundwerkstoff bzw. dem mit Harz imprägnierten Fasermaterial auf- bzw. einzubringen, ist in der Bauform für Gewöhnlich eine Heizvorrichtung angeordnet, welche, wenn sie betrieben wird, den Verbundwerkstoff bzw. den darin enthaltenen Matrixbildner zum Aushärten ausreichend erwärmen kann. Vor allem bei großflächigen Bauformen stellt es jedoch eine Herausforderung dar, die Geometrie der Heizvorrichtung so zu wählen, dass eine ausreichend gleichmäßige Wärmeverteilung in der Bauform gewährleistet werden kann.

In den Bauformen, welche etwa in dem Bereich des Windkraftflügelbaus eingesetzt werden, werden mitunter Heizvorrichtungen vorgesehen, welche als Heizkanäle für die Führung eines Heizfluids oder als Widerstandsheizdrähte in die Bauform eingebracht sind. Typischerweise werden derartige Heizvorrichtungen in die Bauformen, welche Glasfaserlaminat oder Carbonfaserlaminat umfassen, fest einlaminiert und können aus dem Verbund der Bauform nicht mehr entfernt bzw. darin nicht mehr neu angeordnet werden, ohne den Verbund zu zerstören. Werden nun die Heizvorrichtungen betrieben, bilden sich lokale Wärmemaxima auf den zur Formung des Verbundwerkstoffs vorgesehenen Flächenabschnitten aus, welche zu einer ungleichmäßigen Wärmeabgabe an den zu formenden und zu härtenden Verbundwerkstoff beitragen. Die Wärmemaxima entsprechen hierbei in der Regel dem Verlauf der Heizkanäle bzw. dem der Widerstandsheizdrähte.

Eine ungleichmäßige Wärmeabgabe an den Verbundwerkstoff kann jedoch dazu führen, dass bestimmte Bereiche des Verbundwerkstoffes bereits gehärtet bzw. stabilisiert sind, während andere Bereiche noch nicht ausreichend gehärtet oder stabilisiert sind, d.h. die Qualität des herzustellenden Verbundwerkstoffes bzw. des daraus bestehenden Bauteils ist ungenügend. Zudem kann eine zu starke Wärmeeinbringung den Verbundwerkstoff beschädigen oder sogar zerstören. Bei Auftreten von zu hohen Temperaturen ist auch eine lokale Zersetzung oder Zerstörung des Matrixbildners nicht auszuschließen, welche es natürlich zu vermeiden gilt.

Um das Auftreten von lokalen Wärmemaxima zu vermeiden, ist aus dem Stand der Technik bekannt, in die Bauform ein Netz von Carbonfasern mit einzulaminieren, welche eine geeignete Wärmeverteilung erreichen können. Eine solche Bauform ist etwa aus der DK 201070038 A bekannt. Carbonfasern weisen neben einer guten elektrischen Leitfähigkeit auch eine befriedigende Wärmeleitfähigkeit auf, welche vor allem in Faserlängsrichtung einen guten Wärmetransport gewährleisten kann. Hierbei kann das Netz aus Carbonfasern aus einem regelmäßigen Netzwerk aus langgestreckten Carbonfasern ausgebildet sein, welche alle eine vorgegebene Verlaufsrichtung aufweisen und miteinander durch geeignete Anordnung etwa in einem Gewebe mechanisch zu einem flächigen Netzwerk verbunden sind. Nachteilig an diesem Netzwerk von Carbonfasern ist jedoch einerseits der hohe Kostenaufwand, welcher ein solches Carbonfasernetzwerk in seiner Herstellung verursacht. Andererseits ist auch die Wärmeleitfähigkeit der Carbonfasern anisotrop, da die Wärmeleitfähigkeit in Faserlängsrichtung merklich höher ist als in einer Richtung senkrecht zum Verlauf der Faserlängsrichtung. Dies führt mitunter zu einer relativ langsamen Wärmeverteilung bei bestimmten Bauformgeometrien mit Ecken und Kanten, bzw. zu unterschiedlichen Wärmeleitfähigkeiten und einer ungleichmäßigen Wärmeverteilung in unterschiedlichen Richtungen. Damit ist aber die Funktion des Carbonfasernetzwerks für komplexere Bauteilgeometrien nicht ausreichend geeignet.

Aus der DE 3103890C1 ist eine aus Kunststoff bestehende Folientiefziehform bekannt. Offenbart sind Maßnahmen zur Verbesserung der Wärmeableitung.

Um diesen Nachteil aus dem Stand der Technik gemäß der DK 201070038A zu vermeiden, soll vorliegend ein Verfahren mit einer Bauform zur Herstellung von geformten Verbundwerkstoffen bzw. daraus bestehenden Bauteilen vorgeschlagen werden, welche kostengünstige eine gute Wärmeverteilung der Wärme der Heizvorrichtung derart ermöglichen kann, dass eine ausreichend gleichmäßige Wärmeverteilung über einen Flächenabschnitt resultiert, welcher zur Formgebung und zur Wärmeabgabe an den Verbundwerkstoff vorgesehen ist. Zudem soll auch eine möglichst isotrope Wärmeleitfähigkeit in der Fläche ermöglicht werden, welche auch eine ausreichend gleichmäßige und schnelle Wärmeverteilung bei komplexeren Bauteilgeometrien ermöglichen kann. Zudem soll ein Verfahren mit einer Bauform vorgeschlagen werden, welche modular erweitert werden kann, ohne jedoch die Heizvorrichtung in ihrem Aufbau modifizieren zu müssen.

Diese Aufgabe der Erfindung wird durch das Verfahren gemäß Patentanspruch 1 gelöst.

Insbesondere wird die Aufgabe durch ein Verfahren zur Herstellung von geformten Verbundwerkstoffen und unter Verwendung einer Bauform gelöst, welche wenigstens einen zur Formung des Verbundwerkstoffs vorgesehenen ersten Flächenabschnitt und einen diesem im

Wesentlichen gegenüber liegenden, und nicht zur Formung des Verbundwerkstoffs vorgesehenen zweiten Flächenabschnitt aufweist, sowie eine dazwischen angeordnete Heizvorrichtung, wobei wenigstens eine mit dem ersten Flächenabschnitt in Wärmekontakt stehende flächige Metallstruktur zwischen dem ersten Flächenabschnitt und dem zweiten Flächenabschnitt oder auf dem ersten Flächenabschnitt angeordnet ist, welche dazu ausgebildet ist, die von der Heizvorrichtung abgegebene Wärme flächig zu verteilen.

Flächig ist hier und im Folgenden derart zu verstehen, dass die erfindungsgemäße Metallstruktur eine Längenausdehnung bzw. Breitenausdehnung aufweist, welche größer ist als die Höhenausdehnung der Metallstruktur. Eine flächige Metallstruktur besteht hierbei jedoch nicht notwendig selbst aus flächigen Einzelteilen, sonder lediglich die Gesamtgeometrie der Metallstruktur weist eine flächige Geometrie auf. Eine Metallstruktur ist auch flächig, wenn sie bereichsweise flächig ist.

Weiter ist darauf hinzuweisen, dass der zweite Flächenabschnitt nicht mit dem ersten Flächenabschnitt in seiner Flächenausdehnung oder in seiner Geometrie übereinstimmen muss. Vielmehr ist es ausreichend, wenn eine dem ersten Flächenabschnitt im Wesentlichen gegenüber angeordnete Begrenzung als zweiter Flächenabschnitt vorgesehen ist. Diese Begrenzung kann zudem auch mit weiteren Bauteilen oder Vorrichtungen zu einer komplexeren Struktur verbunden sein. Der zweite Flächenabschnitt braucht auch nur bereichsweise flächig ausgebildet sein.

Vorteilhaft an einer derartigen Bauform ist einerseits, dass flächige Metallstrukturen, etwa in Form von Netzen, flächigen Schäumen, Folien oder Vliesen relativ kostengünstig hergestellt werden können. Zudem ist die Wärmeleitfähigkeit solcher Metallstrukturen relativ isotrop, d.h. die Wärmeleitfähigkeit in einer Flächenrichtung unterscheidet sich nicht von der Wärmeleitfähigkeit in einer beliebigen anderen Ausdehnungsrichtung. Damit können auch relativ komplexe Bauformgeometrien realisiert werden, wobei gleichzeitig eine effiziente Wärmeverteilung gesichert werden kann. Zudem erlaubt die Wahl des Metalls bzw. der Zusammensetzung und der Geometrie der Metallstruktur eine geeignete Einstellung der Größe der Wärmeleitfähigkeit selbst. Diese Einstellung kann auch noch durch den Aufbau der Metallstruktur unterstützt werden. Weiterhin sind derartige flächige Metallstrukturen kostengünstiger herzustellen als etwa Carbonfasernetzwerke.

Gemäß einer ersten bevorzugten Ausführungsform ist vorgesehen, dass die wenigstens eine flächige Metallstruktur ein Metallnetz und/oder Metallvlies, insbesondere ein Kupfernetz und/oder ein Kupfervlies umfasst. Ein Metallnetz kann hierbei aus vereinzelten Metalldrähten geformt sein, welche miteinander mechanisch verbunden sind. Eine solche Verbindung kann etwa durch Verweben oder Verflechten erfolgen. Ebenso können die Metalldrähte durch ein Verlöten miteinander verbunden werden. Ein Metallnetz zeichnet sich dadurch aus, dass wenigstens einige der Metalldrähte eine vorbestimmte Ordnung zueinander einnehmen. Dies ist nicht der Fall bei einem Metallvlies, welches eine Vielzahl ungeordneter Metalldrähte aufweist. Diese ungeordneten Metalldrähte in einem Metallvlies können entweder relativ kurz im Vergleich zu der Breiten- und/oder Ländenausdehnung der Metallstruktur sein, d.h. weniger als 5% dieser Maße, bevorzugt weniger als 2% dieser Maße und besonders bevorzugt weniger als 1% dieser Maße aufweisen, oder aber auch einen Anteil an relativ längeren Drähten aufweisen, also mehr als 5% dieser Maße.

Derartige Metallnetze und Metallvliese sind besonders kostengünstig, da sie leicht hergestellt werden können, sowie die notwendigen Materialkosten relativ gering sind. Kupfer eignet sich dabei insbesondere sehr gut zur Wärmeleitung, da es einen Wärmeleitwert zwischen 350 W/(m·K) und 400 W/(m·K) aufweisen kann. Zudem kann es aufgrund seiner relativen Weichheit im Vergleich zu anderen spröderen Metallen gut verarbeitet und geformt werden.

In einer weiteren Ausführungsform kann vorgesehen sein, dass die wenigstens eine flächige Metallstruktur zwischen dem ersten Flächenabschnitt und der Heizvorrichtung angeordnet ist. Damit kann die Wärme, welche von der Heizvorrichtung abgegeben wird, besonders effektiv auf den ersten Flächenabschnitt übertragen und über dessen Fläche verteilt werden. Aufgrund des relativ geringen Wärmewiderstands des Metalls wird demnach auch die Wärme besonders verlustarm und relativ schnell auf den ersten Flächenabschnitt übertragen, so dass die Wärmeenergie an einen zu formenden Verbundwerkstoff effizient weiter gegeben werden kann.

Gemäß einer weiteren Ausführungsform der Erfindung kann vorgesehen sein, dass die wenigstens eine flächige Metallstruktur wenigstens in direktem Kontakt mit der Heizvorrichtung angeordnet ist. Dies gewährleistet einen besonders effizienten Wärmeübertrag von der Heizvorrichtung auf die Metallstruktur und damit einen geringen Gesamtwärmewiderstand bei der Wärmeleitung von der Heizvorrichtung auf den ersten Flächenabschnitt. Zudem wird die Gesamtwärme effizienter flächig verteilt und damit Wärmemaxima geeignet vermieden.

Entsprechend einer weiteren Ausführungsform der vorliegenden Erfindung kann vorgesehen sein, dass die wenigstens eine flächige Metallstruktur in die Bauform einlaminiert, insbesondere vollflächig einlaminiert ist. Eine Einlaminierung vermindert den Einschluss von Luftblasen und Bereichen, welche von Luft gefüllt sind. Solche haben jedoch einen relativ schlechten Wärmeleitwert, d.h. einen relativ großen Wärmewiderstand, und vermindern damit die Wärmeübertragung von der Heizvorrichtung auf den ersten Flächenabschnitt der Bauform. Das Einlaminierung geht typischerweise mit einem Verfahrensschritt des Entlüftens während des Laminiervorgangs einher, so dass nach der Einlaminierung ein deutlich verminderter Luftanteil in der Bauform vorgesehen ist. Aufgrund der Einlaminierung kann auch eine mechanische Stabilisierung der Metallstruktur, insbesondere eine Metallnetzes oder eines Metallvlieses erfolgen.

Entsprechend einem weiteren Aspekt der vorliegenden Erfindung ist vorgesehen, dass die wenigstens eine flächige Metallstruktur wenigstens bereichsweise Aussparungen aufweist. Derartige Aussparungen sollten einerseits relativ klein im Vergleich zu der Gesamtausdehnung des ersten Flächenabschnitts sein, um eine gleichmäßige Wärmeverteilung nicht zu behindern. Andererseits sollten deren Abmessungen ausreichend groß sein, um etwa eine Verankerung in der Bauform zu erlauben. So kann etwa ein Lochgitter, oder ein Netzgitter aus Metall, in einem Laminierprozess so in die Bauform einlaminiert werden, dass in die Aussparungen Laminatmatrix eingreift oder diese sogar durchdringt und somit eine feste Verankerung in der Bauform erfolgt.

Im Falle eines Metallnetzes sind die Aussparungen im Wesentlichen einheitlich, wohingegen im Falle eines Metallvlieses diese Aussparungen relativ uneinheitlich ausfallen können. Dennoch sind beide Arten von Aussparungen geeignet, als Anker bzw. als Befestigungsdurchbrüche für die Metallstruktur zu dienen. Diese Aussparungen müssen jedoch in ihrer allgemeinsten Form nicht als Durchbrüche ausgeführt sein, sondern können auch als Vertiefungen oder Ausnehmungen ausgeführt sein, welche ebenfalls als Verankerungsstrukturen dienen können.

Gemäß einer Weiterführung können die Aussparungen wenigstens bereichsweise Öffnungen sein, die die wenigstens eine flächige Metallstruktur durchbrechen. In einem solchen Fall ist eine besonders sichere und stabile Verankerung der Metallstruktur in der Bauform möglich. Zudem kann auf diese Weise auch eine Gewichtsreduzierung erfolgen, die vor allem bei sehr großflächigen Bauformen, wie etwa im Bereich des Windkraftflügelbaus zu einer merklichen Reduzierung der Gesamtmasse beitragen können. Solche Durchbrüche können auch wie die Aussparungen im Allgemeinen geeignet über die Metallstruktur derart verteilt werden, dass der Flächenleitwert für die Wärmeverteilung wie auch die Verankerung in der Bauform gezielt eingestellt werden können.

Entsprechend einer weiteren Ausführungsform der Erfindung kann auch vorgesehen sein, dass die wenigstens eine flächige Metallstruktur eine regelmäßige Oberflächenstruktur aufweist. Dies ermöglicht eine weitgehend gleichmäßige Wärmeverteilung als auch eine industriell kostengünstige Herstellung der Metallstruktur. Insbesondere bei weniger komplexen Bauformen ermöglicht eine regelmäßige Oberflächenstruktur auch eine ausreichend gleichmäßige Verankerung der Metallstruktur in der Bauform.

Entsprechend einer weiteren Ausführungsform der Erfindung kann auch vorgesehen sein, dass die wenigstens eine flächige Metallstruktur wenigstens bereichsweise, insbesondere regelmäßig, über eine Fläche verteilte Öffnungen aufweist. Dies ermöglicht wiederum eine gezielte Einstellung der Wärmeverteilung als auch eine gezielte Verankerung der Metallstruktur in der Bauform.

Ein weiterer Aspekt kann auch darin bestehen, dass die wenigstens eine flächige Metallstruktur ein Flächengewicht von mindestens 500 g/m² und/oder von höchstens 2000 g/m², bevorzugt 1700 g/m² aufweist. Die Flächengewichte sind ausreichend, um eine geeignete Wärmeverteilung in üblichen Bauformen herbeizuführen, sind jedoch auch ausreichend leicht, um die Bauformen nicht übermäßig schwer zu gestalten. Gerade bei Verwendung von Metallen mit einer Wärmeleitfähigkeit von mehr als 500 g/m² sind diese Flächengewichte gut geeignet, eine effiziente Wärmeverteilung in der Bauform zu erreichen.

Entsprechend einer weiteren Ausführungsform der Erfindung kann auch vorgesehen sein, dass die wenigstens eine flächige Metallstruktur von der Begrenzungsfläche des ersten Flächenabschnitts höchstens 25 mm beabstandet ist. Dies gewährleistet einen relativ geringen Wärmeleitungswiderstand zwischen der Metallstruktur und dem ersten Flächenabschnitt, in oder zu welchen ja die Wärmeenergie zu leiten ist. Durch Bereitstellen einer relativ geringen Zwischenschicht, vor allem in einer laminierten Bauform, welche als Glasfaser- oder Carbonfaser- bzw. als Mischbauform ausgeformt ist, kann so ein unnötig hoher Wärmewiderstand vermieden werden. Dies betrifft insbesondere Bauformen zum Bau von Windkraftanlagenkomponenten.

Gemäße einer sehr bevorzugten Ausführungsform der vorliegenden Erfindung kann vorgesehen sein, dass die wenigstens eine flächige Metallstruktur als Wirrfaservlies ausgebildet ist. Wirrfaservliese sind einerseits relativ einfach und kostengünstig herzustellen und können auch eine relativ gleichmäßige Flächenleitfähigkeit gewährleisten. Wirrfaservliese sind zudem sehr gut drapierbar, was insbesondere dann vorteilhaft ist, wenn das Wirrfaservlies in eine Bauform mit einer komplexeren Geometrie eingebracht bzw. einlaminiert wird. Ferner können die Wirrfaservliese aus Metalldrähten so ausgeführt sein, dass die Metalldrähte ausreichend dünn sind, um diese mit handelüblichen Schnittvorrichtungen kontrolliert zu schneiden.

Entsprechend einem weiteren Aspekt der vorliegenden Erfindung, bzw. einer Ausführungsform davon, kann auch vorgesehen sein, dass die wenigstens eine flächige Metallstruktur wenigstens teilweise mehrere übereinander angeordnete Schichten an Metalldrähten aufweist. Solche Schichten sind typischerweise als eigenständige mechanisch stabile Strukturen zu verstehen, welche in beliebiger Anzahl miteinander verbunden werden können, bzw. aufeinander gelegt werden können. Die Schichten werden hierbei typischerweise vorab vereinzelt hergestellt und anschließend in einem weiteren Herstellungsschritt miteinander verbunden bzw. aufeinander gelegt. Die Verbindung kann hierbei lösbar oder auch permanent erfolgen.

Entsprechend einem weiteren Aspekt der vorliegenden Erfindung kann auch vorgesehen sein, dass die wenigstens eine flächige Metallstruktur eine thermische Leitfähigkeit von mindestens mindestens 17 W/(m·K), bevorzugt zwischen 350 W/(m·K) und 400 W/(m·K) aufweist. Damit wird typischerweise gewährleistet, dass der zu überwindende Wärmewiderstand in einer Bauform ausreichend klein ist, um den Wärmeübertrag auf den ersten Flächenabschnitt ausreichend effizient zu gestalten. Der Leitfähigkeitswert gewährleistet auch eine ausreichend schnelle Wärmeverteilung in der Bauform im Laufe von Änderungen des Wärmeprofils, d.h. bei lokalen oder zeitlichen Änderungen der Wärmeabgabe durch die Heizvorrichtung.

Ausführungsgemäß kann auch vorgesehen sein, dass der erste Flächenabschnitt und/oder der zweite Flächenabschnitt einen glasfaserverstärkten und/oder carbonfaserverstärkten Verbundwerkstoff umfasst. Solche Verbundwerkstoffe erlauben eine besonders geeignete Einbindung der flächigen Metallstruktur in die Bauform durch einen Laminationsprozess. Gleichermaßen sind solche Formen auch für den Einsatz bei der Herstellung von großflächigen Verbundwerkstoffen, etwa im Bereich der Windkraftanlagen, geeignet. Ausführungsgemäß kann die Bauform also auch eine Bauformhalbschale für die Herstellung von Verbundbauteilen eines Rotorflügels von Windkraftanlagen sein.

Entsprechend einer besonders bevorzugten Ausführungsform der Erfindung ist vorgesehen, dass die wenigstens eine flächige Metallstruktur von einem von der Bauform vereinzelbaren Formteil umfasst ist. Das Formteil kann hierbei im Sinne einer Vereinzelung von dem Formteil lösbar entfernt, insbesondere reversibel lösbar entfernt werden. Damit kann die Bauform modular aufgebaut werden, ohne jedoch weitere Änderungen an der Heizungsvorrichtung vornehmen zu müssen. Aufgrund der Fähigkeit der flächigen Metallstruktur auch bei relativ geringen Temperaturunterschieden eine Wärmeverteilung erreichen zu können, kann die Bauform auch mit Aufsätzen bzw. Formteilen versehen werden, in welche oder auf welche die flächige Metallstruktur ein- oder aufgebracht ist. Zudem haben Metalle auch eine vorteilhafte Wärmekapazität, welche erlaubt, die übertragene Wärme zu speichern. Somit eignen sich auch Formteile zur Wärmeverteilung, welche nicht mit der Bauform fest verbunden sind, sondern mit dieser lediglich in einem lösbaren Wärmekontakt angeordnet sind.

Entsprechend einer Weiterführung dieser Ausführungsform kann auch vorgesehen sein, dass das Formteil zur Ausformung von Verbundteilumformungen, insbesondere zur wenigstens teilweisen Ausformung von Verklebelaschen von Verbundbauteilen eines Rotorflügels von Windkraftanlagen vorgesehen ist. Damit haben die Formteile nicht nur die Funktion der Wärmeverteilung sondern auch die der Formgebung. Aufgrund der Lösbarkeit der Anordnung sind formspezifische Einstellungen ohne weitere Probleme möglich.

Nachfolgend wird die Erfindung anhand von Figuren beispielhaft beschrieben. In den Figuren werden gleichwirkende Teile mit gleichen Bezugszeichen versehen. Die in den Figuren dargestellten Merkmale werden für sich allein sowie in jeder anderen Zusammenstellung mit anderen Merkmalen vorliegend für die Erfindung beansprucht. Eine Entnahme einzelner Merkmale aus den nachfolgenden Figuren sowie deren Kombination mit einer Ausführungsform der Erfindung liegt im Bereich des Möglichen des Fachmanns.
Fig. 1 zeigt eine Ausführungsform einer Bauform nach dem Stand der Technik in einer schematischen seitlichen Schnittansicht;
Fig. 2a zeigt eine schematische seitliche Schnittansicht durch eine Bauform in einem Detailausschnitt entsprechend einer Ausführungsform, wie sie im erfindungsgemäßen Verfahren verwendet wird;
Fig. 2b zeigt eine schematische seitliche Schnittansicht durch eine Bauform in einem Detailausschnitt entsprechend einer weiteren Ausführungsform, wie sie im erfindungsgemäßen Verfahren verwendet wird;
Fig. 3a zeigt eine schematische Aufsicht auf eines Ausführungsform eines Wirrfaservlieses als flächige Metallstruktur;
Fig. 3b zeigt eine schematische Aufsicht auf eines Ausführungsform eines Metallnetzes als flächige Metallstruktur;
Fig. 4a zeigt eine schematische seitliche Schnittansicht durch eine Bauform mit zwei vereinzelbaren Formteilen entsprechend einer Ausführungsform, wie sie im erfindungsgemäßen Verfahren verwendet wird;

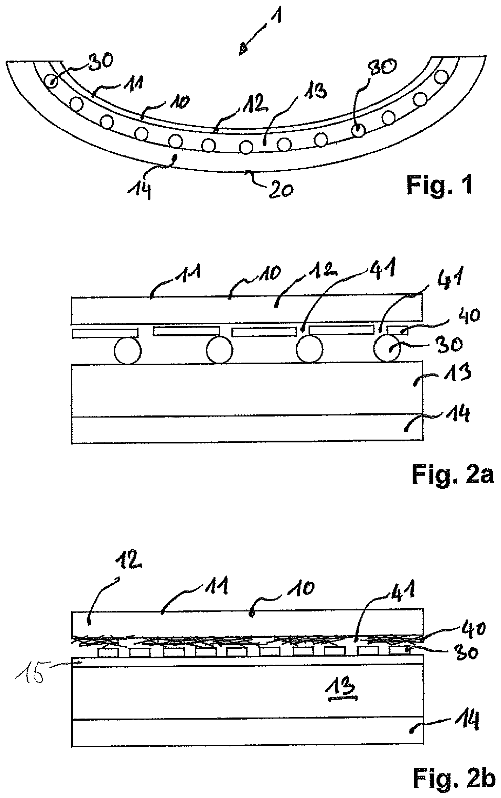

Fig. 1 zeigt eine Ausführungsform einer Bauform 1 nach dem Stand der Technik in einer schematischen seitlichen Schnittansicht. Die Bauform 1 weist einen ersten Flächenabschnitt 10 mit einer zu einem nicht weiter gezeigten Verbundbauteil weisenden Begrenzungsfläche 11 auf. Die Begrenzungsfläche 11 ist konkav ausgebildet und stellt etwa den Aufnahmebereich einer Bauform 1 für die Herstellung eines Windkraftanlagenflügels dar. Der erste Flächenabschnitt 10 wird durch eine erste Lage 12 eines Faserverbundwerkstoffes gebildet, welche mit einer zweiten Lage 13 eines Faserverbundwerkstoffes verbunden, insbesondere verlaminiert bzw. verklebt ist. Innerhalb der zweiten Lage 13 ist eine Heizvorrichtung 30 angeordnet, welche als Heizrohrsystem für die Führung eines Wärmefluids ausgebildet ist. Die Heizvorrichtung kann ebenfalls in die Bauform 1 einlaminiert sein.

Auf der dem ersten Flächenabschnitt 10 gegenüber liegend angeordneten Seite der Bauform 1 ist ein zweiter Flächenabschnitt 20 vorgesehen, welcher als Begrenzungsfläche einer dritten Lage 14 eines Faserverbundwerkstoffes ausgeführt ist. Diese dritte Lage 14 eines Faserverbundwerkstoffes ist mit der zweiten Lage 13 eines Faserverbundwerkstoffes wiederum verlaminiert bzw. verklebt. Alle drei Lagen 12, 13 und 14 bilden eine stabile Bauform 1, welche eine Heizvorrichtung 30 im Inneren vorsieht. Die Lagen 12, 13 und 14 sind typischerweise als Carbonfaser- oder Glasfaserverbundwerkstoff oder als Mischverbundwerkstoff beider Faserarten ausgeführt. Die Lagen 12, 13 und 14 sind vorliegend zudem nur schematisch zu verstehen, da sich die einzelnen Lagen in ihrem Aufbau nicht unterscheiden müssen und nach abgeschlossener Herstellung einer Bauform 1 nicht mehr unterscheidbar sein können.

Wird nun die Heizvorrichtung 30 betrieben, so werden zunächst die Heizrohre und anschließend die unmittelbare umgebenden Bereiche der zweiten Lage 13 eines Faserverbundewerkstoffes sowie die angrenzenden Bereiche der dritten Lage 14 eines Faserverbundwerkstoffes erwärmt. Erst nach entsprechender Wärmeleitung werden die weiter entfernten Bereiche der ersten Lage 12 eines Faserverbundwerkstoffes erwärmt und damit der erste Flächenabschnitt 10.

Da die Lagen 12, 13 und 14 an Faserverbundwerkstoffen allesamt einen relativ großen Wärmewiderstand aufweisen können, wird die in den Heizrohren bereit gestellte Wärme nicht ausreichend flächig über den ersten Flächenabschnitt 10 verteilt, so dass sich auf diesem Wärmemaxima bzw. Temperaturmaxima ergeben. Diese Temperaturmaxima sind jeweils an den Stellen des ersten Flächenabschnitts 10 zu finden, dessen Oberflächenbereiche den geringsten Abstand zu den Zentralpunkten der Querschnitte der Heizrohre aufweisen, welche also direkt über den Heizrohren angeordnet sind.

Damit ist jedoch die Wärmeabgabe über den ersten Flächenabschnitt 10 an den nicht weiter gezeigten Verbundwerkstoff ungleichmäßig und kann zu einem fehlerhaften Aushärten des Verbundwerkstoffes beitragen, indem nämlich bestimmte Bereiche mit deutlich mehr Wärmeenergie bei höherer Temperatur versorgt werden als andere Bereiche. Dies gibt dazu Anlass, dass entweder die mit Wärmeenergie überversorgten Bereiche Zerstörungen oder ungewünschte Veränderungen aufweisen, bzw. andere Bereiche, die mit Wärmeenergie relativ unterversorgt wurden, nicht ausreichend ausgehärtet werden.

Um diesen unerwünschten Resultaten vorzubeugen, sieht die Bauform in einer Ausführungsform nach Fig. 2a vor, zwischen der ersten Lage 12 und der zweiten Lage 13 von Faserverbundwerkstoffen ein flächige Metallstruktur 40 vorzusehen, welche vorliegend aus einer Anzahl an Unterstrukturen im Querschnitt aufgebaut ist. Diese Unterstrukturen sind etwa Metallstreifen, welche miteinander verbunden sind. Die gezeigte Darstellung ist eine Explosionsskizze, welche erlaubt, die einzelnen Bauteile besser darzustellen. Insbesondere wird leichter erkennbar, dass die Metallstruktur 40 flächig ausgebildet ist bevor sie in die Bauform 1 eingebracht wird. Die Einbringung erfolgt etwa indem die flächige Metallstruktur 40 um die Rohre der Heizvorrichtung 30 drapiert wird und die zweite mit der ersten Lage 12 eines Faserverbundwerkstoffs verlaminiert wird.

Wie die Fig. 2a andeutet ist jedes Rohr der Heizvorrichtung 30 mit der flächigen Metallstruktur 40 in Kontakt und kann damit Wärmeenergie direkt an die Metallstruktur 40 weiter leiten. Innerhalb der Metallstruktur 40 erfolgt eine Umverteilung von Wärme, so dass die Wärmeenergie zunächst über einen größeren Bereich der flächigen Metallstruktur 40 durch Wärmeleitung verteilt wird und nachfolgend in die erste Lage 12 eines Faserverbundwerkstoffes eingeleitet wird. Bei Austritt von Wärmeenergie aus dem ersten Flächenabschnitt 10 zum Wärmeübertrag auf den nicht weiter gezeigten Verbundwerkstoff ist damit die flächige Wärmverteilung homogenisiert, so dass die Wärmemaxima bzw. Temperaturmaxima weitgehend vermieden werden können, bzw. deutlich in ihrer relativen Intensität vermindert werden können.

Fig. 2b zeigt eine weitere Ausführungsform der Bauform in einer schematischen seitlichen Schnittansicht. Im Vergleich zu der Ausführungsform in Fig. 2a ist die in Fig. 2b gezeigte Ausführungsform dadurch unterschieden, dass eine weitere Lage 15 eines Faserverbundwerkstoffs vorgesehen ist, welche zwischen der ersten Lage 12 und der zweiten Lage 13 von Faserverbundwerkstoffen vorgesehen ist. Auf dieser weiteren Lage 15 von Faserverbundwerkstoffen ist eine elektrische Heizvorrichtung 30 angeordnet, welche aus einer Anzahl an Widerstandheizdrähten oder Widerstandsheizbändern besteht. Zwischen der Heizvorrichtung 30 und der ersten Lage 12 an Faserverbundwerkstoff ist ein Metallvlies, insbesondere ein Kupfervlies, angeordnet, welches die Funktion der flächigen Metallstruktur 40 erfüllt, also für eine flächige Wärmeverteilung bei Betrieb der Heizvorrichtung 30 sorgt.

Wie in der Ausführungsform gemäß Fig. 2a sind auch in der Ausführungsform gemäß 2b Aussparungen in der Metallstruktur 40 vorgesehen, welche erlauben, Harz oder Kleber eindringen und sogar durchgreifen zu lassen, so dass eine direkte Harzbrücke zwischen der ersten Lage 12 und der weiteren Lage 15 bzw. der zweiten Lage 13 ausgebildet werden kann. Diese direkte Verbindung erlaubt einerseits eine feste Einbindung der flächigen Metallstruktur 40 in die Bauform 1, als auch eine gute Durchdringung der flächigen Metallstruktur 40, um etwa unerwünschte Luftblasen zu vermeiden. Gleichzeitig wird das Gesamtgewicht der flächigen Metallstruktur 40 bei weitgehend unverminderter Wärmeverteilungskapazität vermindert.

Ein Durchdringen der flächigen Metallstruktur 40 durch Kleber oder Harz kann im Falle des Metallvlieses auch dadurch erfolgen, dass Harz bzw. Kleber durch die Öffnungen zwischen den einzelnen Kupferdrähten dringt und durchgreift. Folglich ist das Vorsehen von Aussparungen 41 gar nicht notwendig, wenn das Metallvlies nicht zu dicht ist. Für gängige Metallvliese ist die Durchdringbarkeit ausreichend, um das Vlies in einem Laminierprozess von industrieüblichen Klebern bzw. Harzen durchdringen zu lassen.

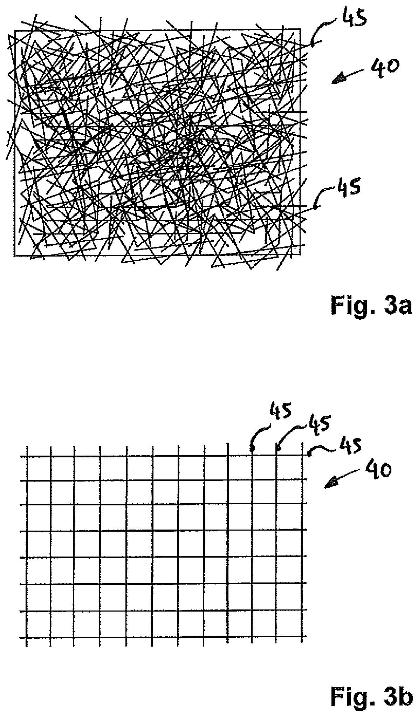

Ein Metallvlies dieser Art ist schematisch in Fig. 3a in Aufsicht dargestellt. Das Metallvlies umfasst eine Vielzahl von einzelnen Metalldrähten 45, welche im Vergleich zu der gezeigten Breitenausdehnung bzw. Längenausdehnung des Vlieses kurz sind. Anders verhält es sich bei dem in Fig. 3b gezeigten Metallgitter, welches aus einer Anzahl an Metalldrähten 45 aufgebaut ist, die geradlinig verlaufen und in der Breitenausdehnung in regelmäßigen Abständen voneinander beabstandet sind. In der gezeigten Längenausdehnung sind ebenfalls eine Anzahl an gleichartigen Metalldrähten 45 wieder in der selben Beabstandung zueinander angeordnet, wobei diese Drähte mit den dazu in Breitenausdehnungsrichtung beabstandeten Metalldrähten 45 verbunden sind. Die Verbindung erfolgt etwa an den Kreuzungsstellen mittels Lötung.

Die Kontaktpunkte der einzelnen Metalldrähte 45 in den beiden in Fig. 3a und 3b gezeigten Anordnungen reichen aus, dass Wärmeenergie von einem Metalldraht 45 zu dem nächsten in sehr effizienter Weise übertragen wird. Damit wird bei Einbringen von Wärmeenergie auf einen begrenzten Bereich einer dieser flächigen Metallstrukturen 40 eine gleichmäßigere Wärmeverteilung erreicht. Da beide flächigen Metallstrukturen 40 eine Anzahl an Öffnungen 41 aufweisen, eigenen sich diese Metallstrukturen 40 in besonderer Weise gut für die Einlaminierung in einer Ausführungsform einer erfindungsgemäßen Bauform 1.

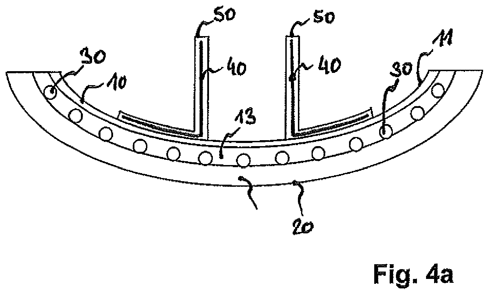

Fig. 4a zeigt eine schematische seitliche Schnittansicht durch eine Bauform 1 mit zwei vereinzelbaren Formteilen 50 entsprechend einer Ausführungsform der vorliegenden Erfindung. Hierbei unterscheidet sich die Ausführungsform nach Fig. 4a von der aus dem Stand der Technik bekannten nach Fig. 1 lediglich dadurch, dass auf dem ersten Flächenabschnitt 10 zwei Formteile 50 vorgesehen sind, welche eine winkelige Schnittform aufweisen. Hierbei ist der eine Schenkel der Formteile 50 jeweils so geformt, dass er formschlüssig an dem ersten Flächenabschnitt 10 flächig anliegt. Die anderen Schenkel sind hingegen derart geformt und angeordnet, dass sie eine senkrechte Begrenzung darstellen, welche in der dargestellten Orientierung nach oben gerichtet ist. Die beiden Formteile 50 weisen jeweils mindestens zwei flächige Metallstrukturen 40 auf, welche etwa in die Formteile 50 einlaminiert sind. Vorliegend sind die flächigen Metallstrukturen einstückig in winkeliger Form in die Formteile 50 einlaminiert.

Wird nun die Heizvorrichtung 30 der Bauform 1 betrieben, erwärmen sich die flächigen Metallstrukturen 40 durch einen indirekten Wärmekontakt mit der Heizvorrichtung 30. Hierbei erwärmen sich zunächst die Abschnitte der flächigen Metallstrukturen 40, welche flächig auf dem ersten Flächenabschnitt 10 angeordnet sind. Durch Wärmeleitung in der flächigen Metallstruktur 40 werden dann jedoch auch die Bereiche der flächigen Metallstrukturen 40 erwärmt, welche in der gezeigten Anordnung nach oben orientiert sind. Ist zwischen den beiden sich nicht mit dem ersten Flächenabschnitt 10 in Formschluss befindlichen Schenkeln der Formteile 50 ein zu formender oder zu erwärmender Verbundwerkstoff angeordnet, kann über diese Schenkel ausreichend Wärme abgegeben werden, um den Verbundwerkstoff etwa zu härten. Damit erfolgt eine Formgebung sowohl durch diese Schenkel, als auch durch einen Abschnitt des ersten Flächenabschnitts 10.

### Bezugszeichen :

- 1: Bauform
- 10: erster Flächenabschnitt
- 11: Begrenzungsfläche
- 12: erste Lage
- 13: zweite Lage
- 14: dritte Lage
- 15: vierte Lage

- 20: zweiter Flächenabschnitt

- 30: Heizvorrichtung

- 40: Metallstruktur
- 41: Aussparungen/Öffnungen
- 45: Metalldrähte

- 50: Formteil

- 100: Verbundwerkstoff

## Patentansprüche

1. Verfahren zur Herstellung von geformten Verbundwerkstoffen (100) und unter Verwendung einer Bauform (1), welche wenigstens einen zur Formung des Verbundwerkstoffs (100) vorgesehenen ersten Flächenabschnitt (10) und einen diesem im Wesentlichen gegenüber liegenden, und nicht zur Formung des Verbundwerkstoffs vorgesehenen zweiten Flächenabschnitt (20) aufweist, sowie eine dazwischen angeordnete Heizvorrichtung (30), **dadurch gekennzeichnet, dass** wenigstens eine mit dem ersten Flächenabschnitt (10, 20) in Wärmekontakt stehende flächige Metallstruktur (40) zwischen dem ersten Flächenabschnitt (10) und dem zweiten Flächenabschnitt (20) oder auf dem ersten Flächenabschnitt (10) angeordnet ist, welche dazu ausgebildet ist, die von der Heizvorrichtung (30) abgegebene Wärme flächig zu verteilen.

2. Verfahren nach Anspruch 1, **dadurch gekennzeichnet, dass** die wenigstens eine flächige Metallstruktur (40) ein Metallnetz und/oder Metallvlies, insbesondere ein Kupfernetz und/oder ein Kupfervlies umfasst.

3. Verfahren nach einem der vorhergehenden Ansprüche, **dadurch gekennzeichnet, dass** die wenigstens eine flächige Metallstruktur (40) zwischen dem ersten Flächenabschnitt (10) und der Heizvorrichtung (30) angeordnet ist.

4. Verfahren nach einem der vorhergehenden Ansprüche, **dadurch gekennzeichnet, dass** die wenigstens eine flächige Metallstruktur (40) in die Bauform (1) einlaminiert, insbesondere vollflächig einlaminiert ist.

5. Verfahren nach einem der vorhergehenden Ansprüche, **dadurch gekennzeichnet, dass** die wenigstens eine flächige Metallstruktur (40) wenigstens bereichsweise Aussparungen (41) aufweist.

6. Verfahren nach einem der vorhergehenden Ansprüche, **dadurch gekennzeichnet, dass** die wenigstens eine flächige Metallstruktur (40) wenigstens bereichsweise, insbesondere regelmäßig, über eine Fläche verteilte Öffnungen (41) aufweist.

7. Verfahren nach einem der vorhergehenden Ansprüche, **dadurch gekennzeichnet, dass** die wenigstens eine flächige Metallstruktur (40) ein Flächengewicht von mindestens 500 g/m² und/oder von höchstens 2000 g/m², bevorzugt 1700 g/m² aufweist.

8. Verfahren nach einem der vorhergehenden Ansprüche, **dadurch gekennzeichnet, dass** die wenigstens eine flächige Metallstruktur (40) von der Begrenzungsfläche (11) des ersten Flächenabschnitts (10) höchstens 25 mm beabstandet ist.

9. Verfahren nach einem der vorhergehenden Ansprüche, **dadurch gekennzeichnet, dass** die wenigstens eine flächige Metallstruktur (40) als Wirrfaservlies ausgebildet ist.

10. Verfahren nach einem der vorhergehenden Ansprüche, **dadurch gekennzeichnet, dass** die wenigstens eine flächige Metallstruktur (40) wenigstens teilweise mehrere übereinander angeordnete Schichten an Metalldrähten (45) aufweist.

11. Verfahren nach einem der vorhergehenden Ansprüche, **dadurch gekennzeichnet, dass** die wenigstens eine flächige Metallstruktur (40) eine thermische Leitfähigkeit von mindestens 17 W/(m*K), bevorzugt zwischen 350 W/(m*K) und 400 W/(m*K) aufweist.

12. Verfahren nach einem der vorhergehenden Ansprüche, **dadurch gekennzeichnet, dass** der erste Flächenabschnitt (10) und/oder der zweite Flächenabschnitt (20) einen glasfaserverstärkten und/oder carbonfaserverstärkten Verbundwerkstoff umfassen.

13. Verfahren nach einem der vorhergehenden Ansprüche, **dadurch gekennzeichnet, dass** die Bauform (1) eine Bauformhalbschale für die Herstellung von Verbundbauteilen eines Rotorflügels von Windkraftan lagen ist.

14. Verfahren nach einem der vorhergehenden Ansprüche, **dadurch gekennzeichnet, dass** die wenigstens eine flächige Metallstruktur (40) von einem von der Bauform (1) vereinzelbaren Formteil (50) umfasst ist.

15. Verfahren nach Anspruch 14, **dadurch gekennzeichnet, dass** das Formteil (50) zur Ausformung von Verbundteilumformungen, insbesondere zur wenigstens teilweisen Ausformung von Verklebelaschen von Verbundbauteilen eines Rotorflügels von Windkraftanlagen vorgesehen ist.

## Claims

1. A method for manufacturing shaped composite materials (100) and employing a building mould (1) comprising at least one first surface section (10) provided for shaping the composite material (100) and a second surface section (20) lying essentially opposite the latter and not provided for shaping the composite material, as well as a heating device (30) arranged between them, **characterized in that** at least one planar metal structure (40) in thermal contact with the first surface section (10, 20) is arranged between the first surface section (10) and the second surface section (20) or on the first surface section (10), and is designed to distribute the heat emitted by the heating device (30) in a planar manner.

2. The method according to claim 1, **characterized in that** the at least one planar metal structure (40) comprises a metal mesh and/or a metal nonwoven, in particular a copper mesh and/or a copper nonwoven.

3. The method according to one of the preceding claims, **characterized in that** the at least one planar metal structure (40) is disposed between the first surface section (10) and the heating device (30).

4. The method according to one of the preceding claims, **characterized in that** the at least one planar metal structure (40) is laminated into the building mould (1), in particular is laminated over an entire surface.

5. The method according to one of the preceding claims, **characterized in that** the at least one planar metal structure (40) at least regionally has notches (41).

6. The method according to one of the preceding claims, **characterized in that** the at least one planar metal structure (40) at least regionally has openings (41) distributed over a surface, in particular in a regular manner.

7. The method according to one of the preceding claims, **characterized in that** the at least one planar metal structure (40) has a surface weight of at least 500 g/m² and at most 2000 g/m², preferably 1700 g/ m².

8. The method according to one of the preceding claims, **characterized in that** the at least one planar metal structure (40) is spaced at most 25 mm apart from the boundary surface (11) of the first surface section (10).

9. The method according to one of the preceding claims, **characterized in that** the at least one planar metal structure (40) is configured as a randomly oriented nonwoven.

10. The method according to one of the preceding claims, **characterized in that** the at least one planar metal structure (40) at least partially has multiple layers of metal wires (45) disposed one over the other.

11. The method according to one of the preceding claims, **characterized in that** the at least one planar metal structure (40) has a thermal conductivity of at least 17 W/(m*K), preferably between 350 W/(m*K) and 400 W/(m*K).

12. The method according to one of the preceding claims, **characterized in that** the first surface section (10) and/or the second surface section (20) comprise a glass fibre-reinforced composite material and/or a carbon fibre-reinforced composite material.

13. The method according to one of the preceding claims, **characterized in that** the building mould (1) is a building mould half shell for manufacturing composite components of a rotor blade for wind power plants.

14. The method according to one of the preceding claims, **characterized in that** the at least one planar metal structure (40) is comprised by a moulded part (50) which can be separated from the building mould (1).

15. The method according to claim 14, characterized that the moulded part (50) is provided for moulding reshaped composite parts, in particular for at least partially moulding adhesive brackets of composite components of a rotor blade for wind power plants.

## Revendications

1. Procédé de fabrication de matériaux composites (100) façonnés en recourant à un moule de formation (1) qui présente
au moins une première partie de surface (10) prévue pour le moulage du matériau composite (100),
une deuxième partie de surface (20) située essentiellement face à la première et non prévue pour mouler le matériau composite
ainsi qu'un dispositif de chauffage (30) situé entre ces parties de surface,
**caractérisé en ce que**
au moins une structure métallique (40) plate en contact thermique avec la première partie de surface (10, 20) est disposée entre la première partie de surface (10) et la deuxième partie de surface (20) ou sur la première partie de surface (10) et est configurée pour répartir en surface la chaleur dégagée par le dispositif de chauffage (30).

2. Procédé selon la revendication 1, **caractérisé en ce qu'**au moins une structure métallique de surface (40) comporte un treillis métallique et/ou un feutre métallique et en particulier un treillis de cuivre et/ou un feutre de cuivre.

3. Procédé selon l'une des revendications précédentes, **caractérisé en ce que** la ou les structures métalliques de surface (40) sont disposées entre la première partie de surface (10) et le dispositif de chauffage (30).

4. Procédé selon l'une des revendications précédentes, **caractérisé en ce que** la ou les structures métalliques de surface (40) sont stratifiées et en particulier stratifiées sur toute leur surface dans le moule de formation (1).

5. Procédé selon l'une des revendications précédentes, **caractérisé en ce que** la ou les structures métalliques de surface (40) présentent des découpes (41) au moins sur certaines de leurs parties.

6. Procédé selon l'une des revendications précédentes, **caractérisé en ce que** la ou les structures métalliques de surface (40) présentent au moins dans certaines parties des ouvertures (41) réparties en particulier de manière uniforme sur une surface.

7. Procédé selon l'une des revendications précédentes, **caractérisé en ce que** la ou les structures métalliques de surface (40) présentent un poids par unité de surface d'au moins 500 g/m² et/ou d'au plus 2 000 g/m² et en particulier de 1 700 g/m².

8. Procédé selon l'une des revendications précédentes, **caractérisé en ce que** la ou les structures métalliques de surface (40) sont maintenues à une distance d'au plus 25 mm de la surface frontière (11) de la première partie de surface (10).

9. Procédé selon l'une des revendications précédentes, **caractérisé en ce que** la ou les structures métalliques de surface (40) sont configurées comme feutre de fibres tourbilonnées.

10. Procédé selon l'une des revendications précédentes, **caractérisé en ce que** la ou les structures métalliques de surface (40) présentent au moins en partie plusieurs couches de fils métalliques (45) disposées les unes au-dessus des autres.

11. Procédé selon l'une des revendications précédentes, **caractérisé en ce que** la ou les structures métalliques de surface (40) présentent une conductivité thermique d'au moins 17 W/(m.K) de préférence comprise entre 350 W/(m.K) et 400 W/(m.K).

12. Procédé selon l'une des revendications précédentes, **caractérisé en ce que** la première partie de surface (10) et/ou la deuxième partie de surface (20) comportent un matériau composite renforcé par des fibres de verre et/ou renforcé par des fibres de carbone.

13. Procédé selon l'une des revendications précédentes, **caractérisé en ce que** le moule de formation (1) est une demi-coquille de moule de formation prévue pour fabriquer des composants composites d'une pale de rotor d'éolienne.

14. Procédé selon l'une des revendications précédentes, **caractérisé en ce que** la ou les structures métalliques de surface (40) sont formées d'une pièce moulée (50) qui peut être séparée du moule de formation (1).

15. Procédé selon la revendication 14, **caractérisé en ce que** la pièce moulée (50) est prévue pour former des déformations partielles de composites, en particulier pour former au moins en partie des pattes de collage de composants composites d'une pale de rotor d'éolienne.
